# EUROPÄISCHE PATENTSCHRIFT

(11) **EP 2 759 499 B1**
(45) Veröffentlichungstag und Bekanntmachung des Hinweises auf die Patenterteilung: **24.08.2016**
(21) Anmeldenummer: 13152700.4
(22) Anmeldetag: 25.01.2013
(51) Int. Cl.: B65G 53/30

(54) **Vorrichtung und Verfahren zur Förderung von Granulat**
Installation and method for conveying granulate
Installation et procédé pour transporter des granulés

(43) Veröffentlichungstag der Anmeldung: 30.07.2014
(73) Patentinhaber: Uhde Inventa-Fischer GmbH, 13509 Berlin (DE)
(72) Erfinder: Siebecke, Ekkehard, 10825 Berlin (DE); Bär, Mirko, 16547 Birkenwerder (DE); Königsmann, Bernd, 15518 Langewahl (DE)
(74) Vertreter: Pfenning, Meinig & Partner mbB

(56) Entgegenhaltungen:
- EP-A2- 1 052 203
- WO-A1-2009/157857
- DE-A1- 19 906 496
- DE-A1-102004 018 023

## Beschreibung

Die vorliegende Erfindung betrifft eine Förderungsvorrichtung zur Förderung von in einer Quelle bevorratetem granulären Material gemäß dem Oberbegriff des Anspruchs 1, beispielsweise Polyamid 6 (PA6)-Granulat, zu mehreren Empfängerstellen, wobei die Förderungsvorrichtung eine der Anzahl an Empfängerstellen entsprechenden Anzahl von Injektoren aufweist. Zudem gibt die vorliegende Erfindung ein Verfahren zur Förderung von granulärem Material, beispielsweise PA6-Granulat von einer Quelle zu mehreren Empfängerstellen an.

Bei der Extraktion von Polyamid-Granulaten (und Granulaten der Co-Polymere von Polyamid) besteht die Notwendigkeit, ein Granulat-Wasser-Gemisch über größere Entfernungen (> 20 m) und Höhen (> 10 m) zu transportieren. Dies geschieht zwischen einzelnen Extraktionsreaktoren bei mehrstufiger Extraktion sowie zwischen letztem Extraktionsreaktor und nachgeschalteter Trockenstufe. Hierzu hat sich neben der Förderung des Granulat-Wasser-Gemisches mittels dafür geeigneten Pumpen (Freistrompumpe mit offenem Laufrad) auch die Förderung mittels Injektoren (statische Treibstrompumpe) bewährt. Mittels eines Treibstromes wird das Granulat durch den Injektor gefördert und zusammen mit dem Treibstrom zur Empfängerstelle geleitet. Dort wird der Treibmittelstrom abgetrennt und wieder zurück zur Treibmittelpumpe geführt. Aus Kostengründen wird der Einsatz von Injektoren bei einer Förderung von einer Sendestelle zu jeweils einer Empfängerstelle bevorzugt. Die Treibstrompumpe beim Einsatz von Injektoren, die in der Regel als mehrstufige Kreiselpumpe ausgeführt ist, ist in der Regel günstiger als die Spezialpumpe, die für die Förderung eines Granulat-Wasser-Gemisches ohne Schädigung des Granulates notwendig ist. Der Wirkungsgrad einer derartigen Pumpe ist in der Regel deutlich schlechter als der Wirkungsgrad einer mehrstufigen Pumpe mit geschlossenem Laufrad.

Die Regelung der Granulat-Fördermenge erfolgt in der Regel mittels Zellrad-schleuse, die im Zustrom der Förderpumpe oder des injektors installiert ist. Der Einsatz von Zellradschleusen ist besonders aufgrund der korrosiven Wirkung des Polyamid-Monomers Caprolactam sehr aufwendig und kostspielig Es müssen sehr leistungsfähige und korrosionsbeständige Dichtungsmaterialien verwendet werden.

Eine Förderungsvorrichtung für Granulat sowie ein Verfahren zur Förderung von Granulat ist bereits aus der WO 2009/157857 A1 bekannt. In dieser Erfindung wird mit Hilfe von komprimierter Luft und Wasser eine Mischung aus Granulat und Flüssigkeit durch ein Rohrsystem transportiert. Das Rohrsystem ist dabei nur an einer Stelle mit dem Behälter verbunden.

Kern und Aufgabe dieser Erfindung ist die Entwicklung eines Fördersystems für ein Granulat-Wasser-Gemisch von einer Sendestelle bzw. Quelle zu mehreren Empfängerstellen, z.B. Granulat-Wasser-Transport von dem letzten Extraktionsreaktor zu mehreren parallel nachgeschalteten Trocknungsreaktoren. Hierbei soll aus Kostengründen auf den Einsatz von Zellradschleusen und dem Einsatz von Spezialpumpen (offenes Laufrad oder Freistrompumpe) verzichtet werden, trotzdem jedoch eine genaue Dosierbarkeit der Förderströme gewährleistet werden.

Es ist daher Aufgabe der vorliegenden Erfindung, eine Förderungsvorrichtung anzugeben, die auf zuverlässige Art und Weise die Förderung von granulärem Material von einer Quelle zu mehreren Empfängerstellen ermöglicht. Ebenso ist es Aufgabe der vorliegenden Erfindung, ein entsprechendes Förderungsverfahren für granuläres Material anzugeben.

Diese Aufgabe wird bezüglich der Förderungsvorrichtung mit den Merkmalen des Anspruchs 1, bezüglich eines Verfahrens zur Förderung von Granulatmaterial mit den Merkmalen des Anspruchs 13 gelöst. Die jeweiligen abhängigen Ansprüche stellen dabei vorteilhafte Weiterbildungen dar.

Erfindungsgemäß wird somit eine Förderungsvorrichtung mit den Merkmalen des Anspruchs 1 zur Förderung von in einer Quelle bevorratetem granulären Material von der Quelle zu mehreren Empfängerstellen angegeben, die eine Anzahl der Empfängerstellen entsprechende Anzahl von Injektoren aufweist, wobei jeder Injektor einen Treibmittelzulauf, einen mit einem Auslass der Quelle verbundenen Granulateinlass sowie einen Auslass für ein Gemisch aus Treibmittel und Granulat aufweist, und jedem Injektor über den jeweiligen Treibmittelzulauf mindestens eine Treibmittelpumpe vorgeschaltet und zwischen jedem Injektor und der mindestens einen vorgeschalteten Treibmittelpumpe mindestens eine Abzweigung zur Abtrennung eines Spülstroms des Treibmittels in die Quelle vorhanden ist.

Gemäß der vorliegenden Erfindung ist somit vorgesehen, dass zur Förderung von granulärem Material zu mehreren Empfängerstationen, insbesondere in Form von Granulat-Wasser-Gemischen, parallel installierte Injektoren verwendet werden.

Eine derartige Förderungsvorrichtung bietet die nachfolgenden Vorteile:

Die Investitionskosten für die beschriebene Vorrichtung sind deutlich niedriger als die Investitionskosten die bei der Kombination aus Zellradschleuse mit Spezialpumpe oder Zellradschleuse mit Injektor entstehen würden.

Die Genauigkeit der Regelung der Granulat-Fördermenge ist gleichwertig mit der Genauigkeit die mittels Zellradschleuse erreicht werden kann.

Über die Rückführung von Extraktionsflüssigkeit, das mit dem Granulat aus dem Extraktionsreaktor heraus gefördert wurde, wird im Auslass des Extraktionsreaktors eine Flüssigkeitsströmung in Richtung des Injektors erzeugt. Hierdurch wird die Strömungsgeschwindigkeit des Granulates erhöht und die Dimension der Auslassstutzen kann reduziert werden. Dies ist bei dem Einsatz von Zellradschleusen nicht möglich.

Die Betriebskosten bei der Verwendung von Injektoren sind geringfügig niedriger als bei Verwendung einer Spezialpumpe mit niedrigem Wirkungsgrad.

Erfindungsgemäß ist vorgesehen, dass die Förderungsvorrichtung zwischen jedem Injektor und der jeweils mindestens einen vorgeschalteten Treibmittelpumpe mindestens eine Abzweigung zur Abtrennung eines Spülstroms des Treibmittels in die Quelle vorhanden ist.

Durch diesen Spülstrom kann ein verbesserter Austrag von granulärem Material aus der Quelle gewährleistet werden.

Insbesondere wird dabei der Spülstrom derart in die Quelle eingespeist, dass in der Quelle bevorratetes Granulat in Richtung des Auslasses gefördert wird.

Vorzugsweise ist der Spülstrom regulierbar, insbesondere verfügt der Spülstrom über ein Regelventil.

Eine weitere bevorzugte Ausführungsform sieht vor, dass die mindestens eine Treibmittelpumpe eine mehrstufige Kreiselpumpe mit geschlossenem oder offenem Laufrad ist.

Vorteilhaft für die Ausführung ist die Verwendung eines Frequenzumformers für den Motor der Treibmittelpumpe. Durch die Modifikation der Pumpendrehzahl können Druck und Fördermenge des Treibmittels und damit auch die Menge des geförderten Granulates zur entsprechenden Empfangsstelle eingeregelt werden. Alternativ können

Die Empfängerstellen verfügen vorteilhafterweise über eine Abtrennvorrichtung zur Abtrennung von Granulat vom Treibmittel.

Insbesondere kann das Treibmittel der Förderungsvorrichtung im Kreislauf geführt werden, d.h. nach Abtrennen des Granulats vom Treibmittel an den Empfängerstellen wird das Treibmittel erneut zur Förderung von granulärem Material aus der Quelle zu den Empfängerstellen eingesetzt.

Besonders vorteilhaft ist die Förderungsvorrichtung frei von Regeleinrichtungen, insbesondere Zellradschleusen und/oder Armaturen.

Die Quelle kann insbesondere in zwei bevorzugten Ausgestaltungen ausgeführt sein, wobei die Quelle
a) einerseits über einen Auslass für das Granulat verfügt, wobei der Granulatstrom nach Austritt aus der Quelle über eine Abzweigung in eine der Anzahl der Impfängerstellen entsprechende Anzahl von Teilströmen aufgeteilt und einem entsprechenden Granulateinlass eines Injektors zugeführt wird, oder
b) mindestens zwei Auslässe aufweist, über die der Quelle jeweils ein Granulatstrom entnommen und einem entsprechenden Granulateinlass eines Injektors zugeführt wird.

Insbesondere ist die Quelle ein Extraktionsreaktor zur Extraktion von Granulat.

Das granuläre Material ist dabei insbesondere ein Granulat eines thermoplastischen Polymers, bevorzugt Polyamid-Granulat, insbesondere PA6 Granulat.

Die Treibmittel können flüssig oder gasförmig sein und sind insbesondere ausgewählt aus der Gruppe bestehend aus Wasser oder Gemischen aus Wasser und ε-Caprolactam.

Die vorliegende Erfindung betrifft ebenso ein Verfahren mit den Merkmalen des Anspruchs 13 zur Förderung von in einer Quelle bevorratetem granulären Material von der Quelle zu mehreren Empfängerstellen mit einer zuvor beschriebenen Förderungsvorrichtung, bei dem mittels der Treibmittelpumpe ein Treibmittelstrom erzeugt wird, derin einen Spülstrom und einen über den Treibmittelzulauf in den jeweiligen Injektor eingespeisten Treibmittelstrom geteilt wird, das granuläre Material aus dem mindestens einen Auslass der Quelle ausgetragen und über den Granulateinlass einem Injektor zugeführt und im Injektor mit dem Treibmittelstrom vermischt und als Granulat-/Treibmittelstrom über den Auslass aus dem jeweiligen Injektor ausgetragen, und dem jeweiligen Empfänger zugeführt wird.

Das erfindungsgemäße Verfahren sieht vor, dass der Spülstrom das granuläre Material aus dem mindestens einen Auslass der Quelle austrägt und über den Granulateinlass einem Injektor zuführt.

Vorzugsweise wird der Druck an der Abzweigung größer eingestellt als der Ausgangsdruck am Auslass der Quelle.

Die vorliegende Erfindung wird anhand der nachfolgenden Figuren un des Beispiels näher erläutert, ohne die Erfindung jedoch auf die dargestellten speziellen Parameter zu beschränken.

### Dabei zeigen

Figur 1 eine erste Ausführungsform einer erfindungsgemäßen Fördervorrichtung, und
Figur 2 eine zweite Ausführungsform einer erfindungsgemäßen Förderungsvorrichtung.

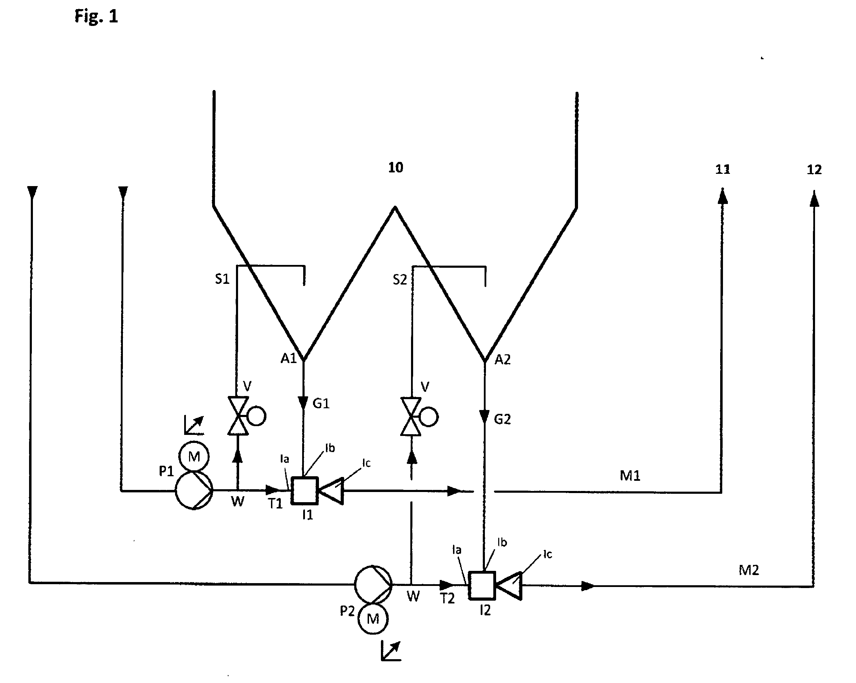

Figur 1 zeigt eine erste Ausführungsform einer erfindungsgemäßen Förderungsvorrichtung, mit der granuläres Material von einer Quelle 10 zu - wie in Figur 1 beispielhaft dargestellt-zwei verschiedenen Empfängerstellen 11 b2w. 12 gefördert werden kann. Die Quelle 10 verfügt dabei über zwei Auslässe A1 und A2, wobei die Quelle 10 in vertikaler Richtung von oben nach unten konisch zu den jeweiligen Auslässen A1 und A2 zusammen läuft. Durch die Auslassstellen A1 und A2 kann das granuläre Material, das in der Quelle 10 bevorratet ist, aus der Quelle 10 herausgeführt werden. Dabei entstehen zwei Teilströme G1 und G2 des granulären Materials, die zwei Injektoren I1 bzw, I2 über den jeweiligen Granulateinlass Ib zugeführt werden. Die Anzahl der Injektoren I entspricht somit der Anzahl der Empfängerstellen. Jeder der Injektoren I verfügt ferner über einen Treibmittelzulauf la, über den ein entsprechendes Treibmittel, beispielsweise Wasser, in den Injektor I eingespeist werden kann. Im Injektor erfolgt eine Vermischung des über den Treibmittelzulaufs Ja zugeführten Treibmittels mit dem über den Zulauf Ib zugeführten Granulat, wobei das Granulat durch den Treibmittelstrom mitgerissen und über den jeweiligen Auslass Ic aus dem jeweiligen Injektor I in Form eines Granulat-Treibmittel-gemischs M1 bzw. M2 ausgetragen wird. Jedem Injektor 11 bzw. 12 ist eine Treibmittelpumpe P1 bzw. P2 vorgeschaltet, die beispielsweise über einen Motor M angetrieben werden kann. Über die Pumpen P1 bzw. P2 wird ein jeweiliger Treibmittelstrom T1 bzw. T2 erzeugt und dem jeweiligen Injektor zugeführt. Gemäß der speziellen Ausgestaltungsform nach Figur 1 ist in jedem Treibmittelstrom T1 bzw. T2 eine Abzweigung W vorgesehen, über die aus dem durch die Pumpen P1 bzw. P2 erzeugten Treibmittelstrom ein Spülstrom S1 bzw. S2 abgezweigt werden kann. Im Spülstrom können Ventile V zur Regulierung des Spülstroms vorhanden sein. Der Spülstrom wird dabei in die Quelle 10 eingespeist und kann beispielsweise in Auslassströmungsrichtung des Granulates gerichtet sein, sodass durch diesen Spülstrom ein aktiver Austrag des Granulats aus der Quelle 10 erreicht werden kann. An den Empfängerstellen 11 und 12 kann eine Abtrennung des Granulates vom Treibmittel erfolgen, das somit vom Granulat befreite Treibmittel kann erneut den Pumpen P1 bzw. P2 zugeführt werden.

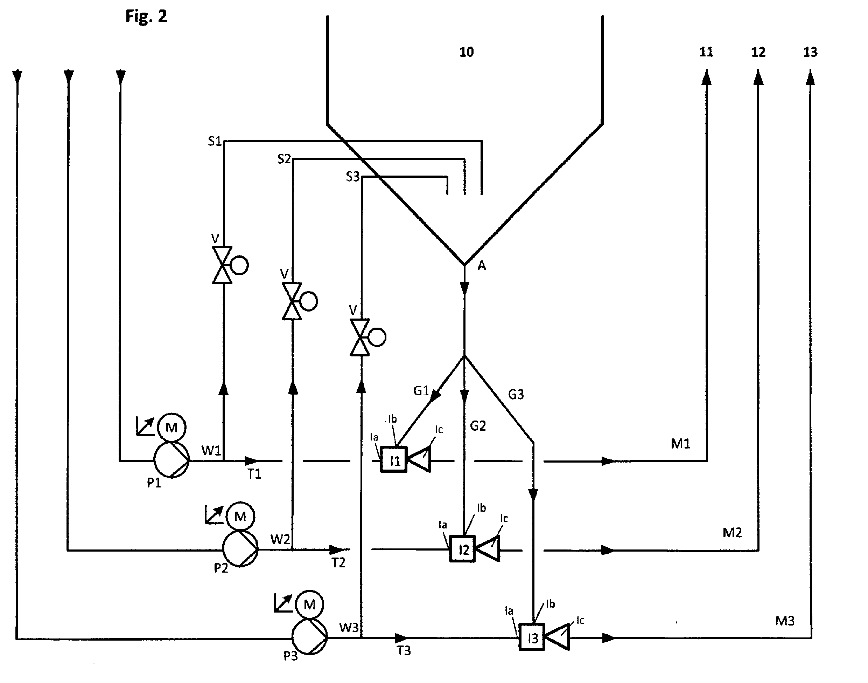

Figur 2 zeigt eine alternative Ausführungsform einer erfindungsgemäßen Förderungsvorrichtung. Gleiche Bezugszeichen bezeichnen dabei gleiche Vorrichtungsbestandteile wie in Figur 1 dargestellt. Im Unterschied zur Figur 1 weist dabei die Granulatquelle 10 nur einen einzigen Auslass A auf, der im Anschluss in drei Teilgranulatströme G1, G2 und G3 aufgeteilt wird. Die einzelnen Granulatströme G1, G2 und G3 werden dabei jeweils einzelnen Injektoren I1, I2 und I3, die jeweils über einen Treibmittelzulauf Ja, einen Granulatzulauf Jb sowie einen Auslass Jc aufweisen, zugeführt. Im Beispielsfall der Figur 2 sind drei Empfängerstellen 11, 12 und 13 vorhanden, weswegen die Förderungsvorrichtung gemäß Figur 2 auch über drei separate Injektoren I1, I2, I3 verfügt. Den jeweiligen Injektoren sind Treibmittelpumpen P1, P2 und P3 vorgeschaltet, wobei auch hier über die Abzweigungen W1 bis W3 ein separater Spülstrom S1, S2, S3 abgezweigt und der Quelle 10 zugeführt werden kann.

### Beispiel

Die Produktionsanlage für PA6-Granulat wird in folgender Weise betrieben:

Die in Fig. 1 dargestellte Extraktionskolonne (10) weist zwei Auslassstutzen (A1, A2), 2 Injektoren (I1, 12) und 2 Treibmittelpumpen (P1, P2) auf. Die Fördermenge pro Injektor beträgt 1600 bis 3400 kg PA6-Granulat/h. Das erzeugte Granulat weist einen Durchmesser von 2,5 x 2,5 mm auf. Der Treibmittelstrom beträgt 25 bis 35 m³ Wasser/h bei einer Treibmitteltemperatur von 95 bis 99 °C. Der Druck vor dem Injektor liegt bei 6,5 bis 9,5 bar. Die Förderhöhe des Granulat beträgt 36 m. Die Treibmittelpumpen werden mit Frequenzumformer betrieben.

## Patentansprüche

1. Förderungsvorrichtung zur Förderung von in einer Quelle (10) bevorratetem granulären Material von der Quelle (10) zu mehreren Empfängerstellen (11, 12, 13, ...), umfassend
eine der Anzahl der Empfängerstellen (11, 12, 13, ...) entsprechende Anzahl von Injektoren (I1, I2, I3, ...), wobei jeder Injektor (I1, I2, I3, ...) einen Treibmittelzulauf (la), einen mit einem Auslass (A) der Quelle (10) verbundenen Granulateinlass (Ib) sowie einen Auslass (Ic) für ein Gemisch aus Treibmittel und Granulat aufweist,
**dadurch gekennzeichnet, dass** jedem Injektor (I3, I2, I3, ...) über den jeweiligen Treibmittelzulauf (la) mindestens eine Treibmittelpumpe (P1, P2, P3, ...) vorgeschaltet ist und zwischen jedem Injektor (I1, I2, I3, ...) und der jeweils mindestens einen vorgeschalteten Treibmittelpumpe (P1, P2, P3, ...) mindestens eine Abzweigung (W) zur Abtrennung eines Spülstroms (S1, S2, S3, ...) des Treibmittels in die Quelle (10) vorhanden ist.

2. Förderungsvorrichtung nach einem der vorhergehenden Ansprüche, **dadurch gekennzeichnet, dass** der Spülstrom (S1, S2, S3, ...) derart in die Quelle (10) eingespeist wird, dass in der Quelle (10) bevorratetes Granulat in Richtung des Auslasses (A) gefördert wird.

3. Förderungsvorrichtung nach einem der vorhergehenden Ansprüche, **dadurch gekennzeichnet, dass** der Spülstrom (S1, S2, S3, ...) regulierbar ist, insbesondere, dass der Spülstrom (S1, S2, S3, ...) über ein Regelventil (V) verfügt.

4. Förderungsvorrichtung nach einem der vorhergehenden Ansprüche, **dadurch gekennzeichnet, dass** die mindestens eine Treibmittelpumpe (P1, P2, P3, ...) eine mehrstufige Kreiselpumpe mit geschlossenem oder offenem Laufrad ist.

5. Förderungsvorrichtung nach Anspruch 5, **dadurch gekennzeichnet, dass** der Druck und die Fördermenge des Treibmittelstromes am Treibmittelzulauf (la) einregelbar ist, entweder über die Drehzahl der Treibmittelpumpe (P1, P2, P3, ...) oder über die Verwendung eines Regelventils zwischen Abzweigung (W1, W2, W3, ...) und dem Eingang des Injektors (I1, I2, I3, ...).

6. Förderungsvorrichtung nach einem der vorhergehenden Ansprüche, **dadurch gekennzeichnet, dass** die Empfängerstellen (11, 12, 13, ...) über eine Abtrennvorrichtung zur Abtrennung von Granulat vom Treibmittel verfügen.

7. Förderungsvorrichtung nach einem der vorhergenenden Ansprüche, **dadurch gekennzeichnet, dass** das Treibmittel im Kreislauf geführt wird.

8. Förderungsvorrichtung nach einem der vorhergehenden Ansprüche, **dadurch gekennzeichnet, dass** die Förderungsvorrichtung frei ist von Regeleinrichtungen, insbesondere Zellradschleusen und/oder Armaturen.

9. Förderungsvorrichtung nach einem der vorhergehenden Ansprüche, **dadurch gekennzeichnet, dass** die Quelle (10)
a) über einen Auslass (A) für das Granulat verfügt, wobei der Granulatstrom nach Austritt aus der Quelle (10) über eine Abzweigung (W2) in eine der Anzahl der Empfängerstellen (11, 12, 13, ...) entsprechende Anzahl von Teilströmen (G1, G2, G3) aufgeteilt und einem entsprechenden Granulateinlass (Ib) eines Injektors (I1, I2, I3, ...) zugeführt wird, oder
b) mindestens zwei Auslässe (A1, A2, ...) aufweist, über die der Quelle (10) jeweils ein Granulatstrom (G1, G2, ...) entnommen und einem entsprechenden Granulateinlass (Ib) eines Injektors (I1, I2, ...) zugeführt wird.

10. Förderungsvorrichtung nach einem der vorhergehenden Ansprüche, **dadurch gekennzeichnet, dass** die Quelle (10) ein Extraktionsreaktor zur Extraktion von Granulat ist.

11. Förderungsvorrichtung nach einem der vorhergehenden Ansprüche, **dadurch gekennzeichnet, dass** das granuläre Material ein Granulat eines thermoplastischen Polymers, bevorzugt Polyamid-Granulat, insbesondere PA 6 Granulat ist.

12. Förderungsvorrichtung nach einem der vorhergehenden Ansprüche, **dadurch gekennzeichnet, dass** das Treibmittel flüssig oder gasförmig ist und insbesondere ausgewählt ist aus der Gruppe bestehend aus Wasser oder Gemischen aus Wasser und E-Caprofactam.

13. Verfahren zur Förderung von in einer Quelle (10) bevorratetem granulären Material von der Quelle (10) zu mehreren Empfängerstellen (11, 12, 13, ...) mit einer Förderungsvorrichtung nach einem der vorhergehenden Ansprüche, bei dem
mittels der Treibmittelpumpe (P1, P2, P3, ...) ein Treibmittelstrom erzeugt wird, der in einen Spülstrom (S1, S2, S3, ...) und einen über den Treibmittelzulauf (la) in den jeweiligen Injektor (I1, I2, I3, ...) eingespeisten Treibmittelstrom (T1, T2, T3, ...) geteilt, das granuläre Material aus dem mindestens einen Auslass (A) der Quelle ausgetragen und über den Granulateinlass (Ib) einem Injektor (I1, I2, I3, ...) zugeführt und im Injektor (I1, I2, I3, ...) mit dem Treibmittelstrom (T1, T2, T3, ...) vermischt und als Granulat-/Treibmittelstrom (M1, M2, M3, ...) über den Auslass (Ic) aus dem jeweiligen Injektor (I1, I2, I3, ...) ausgetragen, und
dem jeweiligen Empfänger (11, 12, 13, ...) zugeführt wird.

14. Verfahren nach vorhergehendem Anspruch, **dadurch gekennzeichnet, dass**
das granuläre Material mittels des Spülstroms (S1, S2, S3, ...) aus dem mindestens einen Auslass (A) der Quelle ausgetragen und über den Granulateinlass (Ib) einem Injektor (I1, I2, I3, ...) zugeführt wird.

15. Verfahren nach einem der beiden vorhergehenden Ansprüche,
**dadurch gekennzeichnet, dass** der Druck an der Abzweigung (W, W2) größer eingestellt wird als der Ausgangsdruck am Auslass (A, A1, A2) der Quelle (10).

16. Verfahren nach einem der Ansprüche 13 bis 15, **dadurch gekennzeichnet, dass** an den Empfängerstellen (11, 12, 13, ...) eine Abtrennung des granulären Materials vom Treibmittel erfolgt.

17. Verfahren nach einem der Ansprüche 13 bis 16, **dadurch gekennzeichnet, dass** das Treibmittel in einem Kreislauf geführt wird.

## Claims

1. Transfer device for transferring granular material stored in a source (10) from the source (10) to several receiving sites (11, 12, 13, ...), comprising
a number of injectors (I1, I2, I3, ...) corresponding to the number of receiving sites (11, 12, 13, ...), wherein each injector (I1, I2, I3, ...) has a propellant inlet (Ia), a granulate inlet (Ib) connected to an outlet (A) of the source (10) and an outlet (Ic) for a mixture of propellant and granulate,
**characterised in that** at least one propellant pump (P1, P2, P3, ...) is installed upstream of each injector (I1, I2, I3, ...) via the respective propellant inlet (Ia) and at least one junction (W) for the separation of a flushing flow (S1, S2, S3, ...) of the propellant in the source (10) is present between each injector (I1, I2, I3, ...) and the respective at least one upstream propellant pump (P1, P2, P3, ...).

2. Transfer device according to one of the preceding claims, **characterised in that** the flushing flow (S1, S2, S3, ...) is fed into the source (10) in such a way that granulate stored in the source (10) is transferred in the direction of the outlet (A).

3. Transfer device according to one of the preceding claims, **characterised in that** the flushing flow (S1, S2, S3, ...) is able to be regulated, in particular the flushing flow (S1, S2, S3, ...) has a control valve (V).

4. Transfer device according to one of the preceding claims, **characterised in that** the at least one propellant pump (P1, P2, P3, ...) is a multistage centrifugal pump having a closed or open impeller.

5. Transfer device according to claim 5, **characterised in that** the pressure and flow rate of the propellant flow can be adjusted at the propellant inlet (Ia), either by the speed of the propellant pump (P1, P2, P3, ...) or by using a control valve between the junction (W1, W2, W3, ...) and the inlet of the injector (I1, I2, I3, ...).

6. Transfer device according to one of the preceding claims, **characterised in that** the receiving sites (11, 12, 13, ...) have a separation device to separate granulate from the propellant.

7. Transfer device according to one of the preceding claims, **characterised in that** the propellant is circulated.

8. Transfer device according to one of the preceding claims, **characterised in that** the transfer device is free from control devices, in particular rotary valves and/or fittings.

9. Transfer device according to one of the preceding claims, **characterised in that** the source (10)
a) has an outlet (A) for granulate, wherein, after discharge from the source (10) via a junction (W2), the granulate flow is divided into a number of partial flows (G1, G2, G3) corresponding to the number of receiving sites (11, 12, 13, ...) and is supplied to a corresponding granulate inlet (Ib) of an injector (I1, I2, I3, ...), or
b) has at least two outlets (A1, A2, ...) via which a respective granulate flow (G1, G2, ...) is taken from the source (10) and supplied to a corresponding granulate inlet (Ib) of an injector (I1, I2, ...).

10. Transfer device according to one of the preceding claims, **characterised in that** the source (10) is an extraction reactor for the extraction of granulate.

11. Transfer device according to one of the preceding claims, **characterised in that** the granular material is a granulate of a thermoplastic polymer, preferably polyamide granulate, in particular PA 6 granulate.

12. Transfer device according to one of the preceding claims, **characterised in that** the propellant is a liquid or gas and in particular is selected from the group consisting of water or mixtures of water and e-caprolactam.

13. Method for the transfer of a granular material stored in a source (10) from the source (10) to several receiving sites (11, 12, 13, ...) using a transfer device according to one of the preceding claims, wherein
a propellant flow is produced by means of the propellant pump (P1, P2, P3, ...), said propellant flow being divided into a flushing flow (S1, S2, S3, ...) and a propellant flow (T1, T2, T3) fed into the respective injector (I1, I2, I3, ...) via the propellant inlet (Ia), the granular material is transferred from the at least one outlet (A) of the source and supplied to an injector (I1, I2, I3, ...) via the granulate inlet (Ib) and mixed with the propellant flow (T1, T2, T3, ...) in the injector (I1, I2, I3, ...) and transferred as granulate/propellant flow (M1, M2, M3, ...) from the respective injector (I1, I2, I3, ...) via the outlet (Ic), and
supplied to the respective receiver (11, 12, 13, ...).

14. Method according to the preceding claim, **characterised in that**
the granular material is transferred from the at least one outlet (A) of the source by means of the flushing flow (S 1, S2, S3, ...) and supplied to an injector (I1, I2, I3, ...) via the granulate inlet (Ib).

15. Method according to one of the two preceding claims, **characterised in that** the pressure at the junction (W, W2) is set to be greater than the output pressure at the outlet (A, A1, A2) of the source (10).

16. Method according to one of claims 13 to 15, **characterised in that** a separation of the granular material from the propellant takes place at the receiving sites (11, 12, 13, ...).

17. Method according to one of claims 13 to 16, **characterised in that** the propellant is circulated.

## Revendications

1. Dispositif de transport pour le transport de matériau granulaire stocké dans une source (10), à partir de la source (10) vers plusieurs postes destinataires (11, 12, 13, ...), comprenant
un nombre d'injecteurs (11, 12, 13, ...) correspondant au nombre de postes destinataires (11, 12, 13, ...), chaque injecteur (I1, I2, I3, ...) présentant une arrivée d'agent propulseur (la), une admission de granulés (Ib) raccordée à une évacuation (A) de la source (10) ainsi qu'une évacuation (Ic) pour un mélange d'agent propulseur et de granulés,
**caractérisé en ce qu'**au moins une pompe d'agent propulseur (P1, P2, P3, ...) est montée en amont de chaque injecteur (11, 12, 13, ...) par le biais de l'arrivée d'agent propulseur (la) et **en ce que**, entre chaque injecteur (I1, I2, I3, ...) et la pompe d'agent propulseur (P1, P2, P3, ...) respectivement au moins au nombre de une montée en amont, il y a au moins un embranchement (W) destiné à la séparation d'un flux de rinçage (S1, S2, S3, ...) de l'agent propulseur dans la source (10).

2. Dispositif de transport selon l'une des revendications précédentes, **caractérisé en ce que** le flux de rinçage (S1, S2, S3, ...) est introduit dans la source (10) de telle sorte que les granulés stockés dans la source (10) sont transportés en direction de l'évacuation (A).

3. Dispositif de transport selon l'une des revendications précédentes, **caractérisé en ce que** le flux de rinçage (S1, S2, S3, ...) peut être régulé, en particulier **en ce que** le flux de rinçage (S1, S2, S3, ...) dispose d'une soupape de régulation (V).

4. Dispositif de transport selon l'une des revendications précédentes, **caractérisé en ce que** la pompe d'agent propulseur (P1, P2, P3, ...) au moins au nombre de une est une pompe centrifuge à plusieurs étages avec une roue fermée ou ouverte.

5. Dispositif de transport selon la revendication 5, **caractérisé en ce que** la pression et le débit du flux d'agent propulseur au niveau de l'arrivée d'agent propulseur (la) peuvent être régulés, soit par le biais de la vitesse de rotation de la pompe d'agent propulseur (P1, P2, P3, ...) soit par le biais de l'utilisation d'une soupape de régulation entre l'embranchement (W1, W2, W3, ...) et l'entrée de l'injecteur (I1, I2, I3, ...).

6. Dispositif de transport selon l'une des revendications précédentes, **caractérisé en ce que** les postes destinataires (11, 12, 13, ...) disposent d'un dispositif de séparation destiné à réaliser une séparation entre les granulés et l'agent propulseur.

7. Dispositif de transport selon l'une des revendications précédentes, **caractérisé en ce que** l'agent propulseur est guidé dans le circuit.

8. Dispositif de transport selon l'une des revendications précédentes, **caractérisé en ce que** le dispositif de transport est dépourvu de systèmes de régulation, en particulier de sas à roue cellulaire et/ou de robinetterie.

9. Dispositif de transport selon l'une des revendications précédentes, **caractérisé en ce que** la source (10)
a) dispose d'une évacuation (A) pour les granulés, le flux de granulés étant, après avoir quitté la source (10), divisé par le biais d'un embranchement (W2) en un nombre de flux partiels (G1, G2, G3) correspondant au nombre de postes destinataires (11, 12, 13, ...) et conduit à une admission de granulés (Ib) correspondante d'un injecteur (11, 12, 13, ...) ou
b) présente au moins deux évacuations (A1, A2, ...) par le biais desquelles un flux de granulés (G1, G2, ...) est respectivement prélevé et acheminé à une admission de granulés (Ib) correspondante d'un injecteur (11, 12, 13, ...).

10. Dispositif de transport selon l'une des revendications précédentes, **caractérisé en ce que** la source (10) est un réacteur d'extraction destiné à l'extraction des granulés.

11. Dispositif de transport selon l'une des revendications précédentes, **caractérisé en ce que** le matériau granulaire est constitué de granulés d'un polymère thermoplastique, de préférence des granulés de polyamide, en particulier des granulés de PA 6.

12. Dispositif de transport selon l'une des revendications précédentes, **caractérisé en ce que** l'agent propulseur est liquide ou gazeux et en particulier est sélectionné dans le groupe composé d'eau ou de mélanges d'eau et de E-caprolactame.

13. Procédé de transport de matériau granulaire stocké dans une source (10), à partir de la source (10) vers plusieurs postes destinataires (11, 12, 13, ...), avec un dispositif de transport selon l'une des revendications précédentes, dans lequel,
au moyen de la pompe d'agent propulseur (P1, P2, P3, ...), il est produit un flux d'agent propulseur qui est divisé en un flux de rinçage (S1, S2, S3, ...) et un flux d'agent propulseur (T1, T2, T3, ...) introduit dans l'injecteur (I1, I2, I3, ...) respectif par le biais de l'arrivée d'agent propulseur (la), le matériau granulaire est extrait de l'évacuation (A) au moins au nombre de un de la source et acheminé, par le biais de l'admission de granulés (Ib) à un injecteur (I1, I2, I3, ...) et mélangé dans l'injecteur (11, 12, 13, ...) avec le flux d'agent propulseur (T1, T2, T3, ...) et extrait de l'injecteur (I1, I2, I3, ...) respectif en tant que flux de granulés/agent propulseur (M1, M2, M3, ...) par le biais de l'évacuation (Ic), et
acheminé au destinataire (11, 12, 13, ...) respectif.

14. Procédé selon la revendication précédente, **caractérisé en ce que**
le matériau granulaire est extrait de la sortie (A) au moins au nombre de une de la source au moyen du flux de rinçage (S1, S2, S3, ...) et acheminé à un injecteur (11, 12, 13, ...) par le biais de l'admission de granulés (Ib).

15. Procédé selon l'une des deux revendications précédentes, **caractérisé en ce que** la pression à l'embranchement (W, W2) est réglée à un niveau plus élevé que la pression de sortie à l'évacuation (A, A1, A2) de la source (10).

16. Procédé selon l'une des revendications 13 à 15, **caractérisé en ce qu'**une séparation entre le matériau granulaire et l'agent propulseur est effectuée au niveau des postes destinataires (11, 12, 13, ...).

17. Procédé selon l'une des revendications 13 à 15, **caractérisé en ce que** l'agent propulseur est guidé dans un circuit.
